# EUROPÄISCHE PATENTSCHRIFT

(11) **EP 1 597 477 B1**
(45) Veröffentlichungstag und Bekanntmachung des Hinweises auf die Patenterteilung: **14.04.2010**
(21) Anmeldenummer: 04703365.9
(22) Anmeldetag: 20.01.2004
(51) Int. Cl.: F03D 11/00

(54) **VERFAHREN ZUR MONTAGE VON ROTORBLÄTTERN**
METHOD FOR MOUNTING ROTOR BLADES
PROCEDE DE MONTAGE DE PALES DE ROTOR

(30) Priorität: 10.02.2003 DE 10305543
(43) Veröffentlichungstag der Anmeldung: 23.11.2005
(60) Teilanmeldung: 10154694.3
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2004/000368
(87) Internationale Veröffentlichungsnummer: WO 2004/070203

(56) Entgegenhaltungen:
- EP-A- 1 101 936
- DE-A- 10 200 401
- DE-A- 10 225 025
- US-A- 5 401 138
- US-B1- 6 364 609
- PATENT ABSTRACTS OF JAPAN Bd. 1999, Nr. 08, 30. Juni 1999 (1999-06-30) & JP 11 082285 A (NKK CORP), 26. März 1999 (1999-03-26)

## Beschreibung

Die vorliegende Erfindung betrifft ein Verfahren zur Montage von Rotorblättern an einer Rotornabe, die mit einer Gondel einer Windenergieanlage verbunden ist, wie im Oberbegriff von Anspruch 1 definiert wird. Ein solches Verfahren ist z.B. aus der EP-A-1 101 936 bekannt.

Rotorblätter für Windenergieanlagen sind allgemein bekannt. Mit zunehmender Größe der Windenergieanlagen und ansteigender Leistung nimmt auch die Größe der Rotorblätter sowie deren Eigengewicht zu. Zur Montage der Komponenten sind deshalb Kräne erforderlich, die Lasten mit höherem Eigengewicht in größere Höhen transportieren können. Demnach werden auch die benötigten Kräne größer.

Aufgabe der Erfindung ist es, die Montage der Rotorblätter zu vereinfachen sowie die Handhabbarkeit der Rotorblätter zu verbessern.

Die Aufgabe der Erfindung wird durch ein Verfahren zur Rotorblatt-Montage nach Anspruch 1.

Das Verfahren zur Montage von Rotorblättern an einer Rotornabe, welche mit einer Gondel einer Windenergieanlage verbunden ist, erfolgt durch Drehen der Rotornabe in eine vorgegebene erste Position, Anbringen eines Rotorblattes, Drehen der Rotornabe mit Hilfs des Rotorblattes in eine vorgegebene zweite Position, wobei die Drehung der Rotornabe in Richtung der Schwerkraftwirkung des bereits montierten ersten Rotorblattes erfolgt.

Somit kann auch bei der Montage von Rotorblättern an Windenergieanlagen mit einer relativ großen Nabenhöhe ein Kran verwendet werden, der auch zur Montage der Rotornabe selbst bzw. der Gondel ausreicht.

In einer besonders bevorzugten Weiterbildung des erfindungsgemäßen Verfahrens wird die Gondel um 180 Grad gedreht, bevor das zweite Rotorblatt angebracht wird. Diese Vorgehensweise gestattet die Montage des zweiten Rotorblattes, ohne dass der Kran seinen Standort verändern muss, da sich durch die Drehung der Gondel die Anbauposition des Rotorblattes wiederum an der Seite der Windenergieanlage befindet, an welcher der Kran aufgebaut ist

In einer weiteren bevorzugten Weiterbildung des Verfahrens wird die Rotornabe mit Hilfe des zweiten Rotorblattes in eine weitere vorgegebene Position gedreht, die Gondel erneut um 180 Grad gedreht und ein drittes Rotorblatt 23 angebracht.

Auch diese Montage des dritten Rotorblattes ist ohne eine Änderung des Standortes des Kranes möglich und durch die Einsparung der aufwändigen Standortwechsel des Kranes lassen sich die Rotorblätter zeitsparend anbringen.

Um die Drehung der Nabe auf besonders einfache und wirkungsvolle Weise zu unterstützen, kann der Kran an dem Rotorblatt und insbesondere bevorzugt an einem Durchgangsloch des Rotorblattes angreifen und somit die Drehung des Rotorblattes in Richtung der Schwerkraft durch eine entgegengesetzt gerichtete Kraft verzögern. Dadurch kann die Drehung auf einfache Weise sicher kontrolliert und beeinflusst werden.

Um die Handhabbarkeit des Rotorblattes zu verbessern, weist das Rotorblatt wenigstens ein Durchgangsloch in dem Rotorblatt an einer vorgegebenen Position auf. Dies hat insbesondere den Vorteil, dass Handhabungsmittel, welche durch das Rotorblatt hindurch greifen können, in der Anwendung schneller und sicherer sind als die bekannte Handhabung mit Gurten und Zurrseilen.

Weitere vorteilhafte Ausführungsformen sind in den Unteransprüchen angegeben.

Im Folgenden wird die Erfindung anhand der Figuren näher beschrieben. Dabei zeigen;
- Fig. 1: eine Seitenansicht eines Rotorblattes;
- Fig. 2: eine Seitenansicht eines Rotorblattes;
- Fig, 3: eine vereinfachte Querschnitts-Darstellung eines Rotorblatt-Abschnittes mit einem Durchgangsloch;
- Fig. 4: eine vereinfachte Querschnitts-Darstellung eines Rotorblatt-Abschnittes mit einer alternativen Ausführungsform des Durchgangsloches;
- Fig. 5: die Ausgangssituation bei dem erfindungsgemäßen Verfahren zur Montage des Rotorblattes;
- Fig. 6: den ersten Schritt des erfindungsgemäßen Verfahrens;
- Fig. 7: den zweiten Schritt des erfindungsgemäßen Verfahrens;
- Fig. 8: den dritten Schritt des erfindungsgemäßen Verfahrens;
- Fig. 9: den vierten Schritt des erfindungsgemäßen Verfahrens;
- Fig. 10: den fünften Schritt des erfindungsgemäßen Verfahrens;
- Fig. 11: den sechsten Schritt des erfindungsgemäßen Verfahrens;
- Fig. 12: den siebten Schritt des erfindungsgemäßen Verfahrens; und
- Fig. 13: den achten Schritt des erfindungsgemäßen Verfahrens.

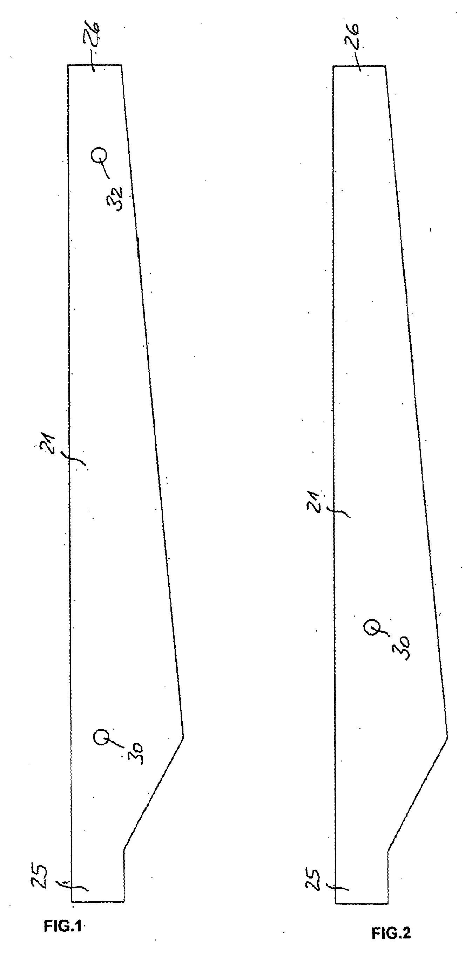

In der Draufsicht in Fig. 1 ist eine vereinfachte Darstellung des Rotorblattes 21 gezeigt. Dieses Rotorblatt 21 weist in seiner Längsrichtung zwischen der Rotorblattwurzel 25 und der Rotorblattspitze 26 zwei Durchgangslöcher 30, 32 auf. Das Durchgangsloch 32 ist im Bereich der Rotorblattspitze 26 ausgebildet, während das Durchgangsloch 30 sich im rotorblattwurzelnehen Bereich befindet. Dabei sind diese Positionen so festgelegt, dass eine sichere Handhabung des Rotorblattes bei seiner Montage an einer Rotornabe einer Windenergieanlage gewährleistet ist. Die Festlegung der Position für die Löcher 30, 32 erfolgt unter Berücksichtigung einer Verbindung zu der tragenden Struktur des Rotorblattes 21.

Fig. 2 zeigt eine Seitenansicht des Rotorblattes 21 mit nur einem Durchgangsloch 30. Dieses einzelne Durchgangsloch 30 ist in sinnvoller Weise im Schwerpunkt des Rotorblattes angeordnet, so dass auch mit einem Handhabungsmittel das Rotorblatt sicher handhabbar ist. Auch hier wird natürlich eine Verbindung mit der tragenden Struktur berücksichtigt.

Weitere Ausführungsformen mit mehr als zwei Durchgangslöchern sind ebenfalls möglich.

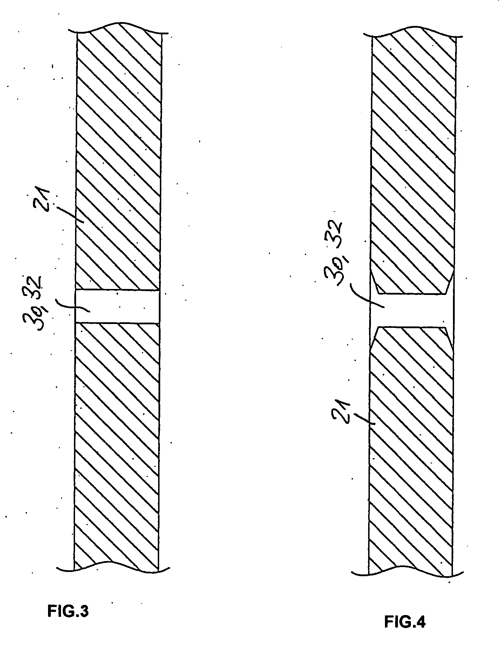

In den Figuren 3 und 4 sind beispielhaft alternative Ausführungsformen der Durchgangslöcher gezeigt.

In Fig. 3 ist ein zylindrische Durchgangsloch 30, 32 dargestellt, welches durch geeignete Abdeckungen verschlossen werden kann.

Fig. 4 zeigt ein Durchgangsloch 30, 32, welches in einem mittleren Abschnitt ebenfalls zylindrisch ist, wobei sich die den Oberflächen des Rotorblattes 21 benachbarten Endabschnitte des Durchgangsloches 30, 32 aber verbreitern. Diese Verbreiterung gestattet ein verbessertes Anbringen von Abdeckungen, die das Durchgangsloch 30, 32 verschließen, um einerseits das Eindringen von Schmutz und Feuchtigkeit zu verhindern und andererseits eine Beeinflussung der Strömung am Rotorblatt durch das Loch zu unterbinden, indem sie sich bündig in die Oberfläche einfügen. Dabei kommen zur Befestigung einer solchen (nicht dargestellten) Abdeckung unterschiedliche, an sich bekannte Möglichkeiten, in Betracht, wie z. B. eine Hinterschneidung, Gewinde, etc.

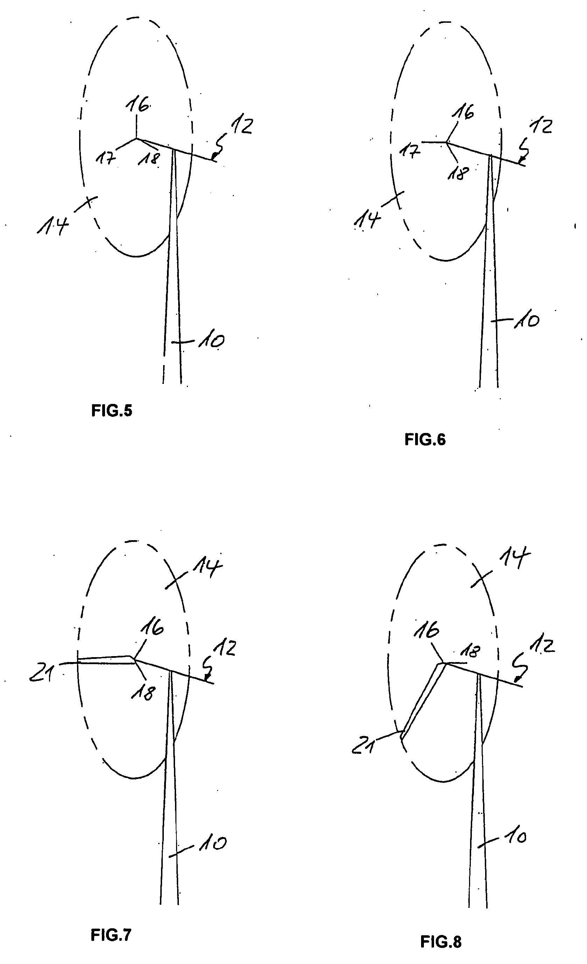

In Fig. 5 ist die Ausgangssituation des erfindungsgemäßen Verfahrens zum Anbringen von Rotorblättern an der Rotornabe einer Windenergieanlage dargestellt. Dabei werden vorzugsweise Rotorblätter mit Durchgangslöchern, wie in Fig. 1 und 2 dargestellt, verwendet. In dieser und den folgenden Figuren 5-13 sind die zur Erläuterung der Erfindung erforderlichen Komponenten stark vereinfacht dargestellt. Dabei bezeichnet das Bezugszeichen 10 den Turm einer Windenergieanlage, 12 weist auf die Ausrichtung der Gondel hin, 14 stellt den Rotorkreis dar, 16, 17 und 18 geben die Orientierung der Rotorblattanschlüsse an und 21, 22 und 23 bezeichnen angebaute Rotorblätter.

Zur Montage der Rotorblätter an der Rotornabe der Gondel einer Windenergieanlage werden Handhabungsmittel in den Durchgangslöchern 30, 32 befestigt, um mit ihnen sowie mit Hilfe eines Kranes die Rotorblätter sicher nach oben zur Rotornabe befördern zu können. Da die Durchgangslöcher zwischen der Saug- und der Druckseite des Rotorblattes verlaufen, können die Rotorblätter in einer horizontalen Lage sicher gehandhabt werden. Das Vorsehen der oben beschriebenen Durchgangslöcher in den Rotorblättern vereinfacht das nachfolgend beschriebene Verfahren zur Montage dieser Rotorblätter erheblich.

In Fig. 5 befindet sich der Rotorkreis 14 in der Betrachtungsrichtung hinter dem Turm 10 der Windenergieanlage und die Rotorblattanschlüsse 16, 17, 18 befinden sich in den Positionen 12 Uhr, 4 Uhr und 8 Uhr.

In dem ersten Verfahrensschritt wird nun die Rotornabe in eine vorgegebene Position gebracht. Diese ist in Fig. 6 dargestellt. Wesentlich ist dabei, dass der Rotorblattanschluss 17 jetzt in der 9-Uhr-Position ist. Entsprechend befindet sich jetzt der Rotorblattanschluss 16 in der 1-Uhr-Position und der Rotorblattanschluss 18 in der 5-Uhr-Position.

Durch die so erreichte Ausrichtung des Rotorblattanschlusses 17 ist es möglich, ein Rotorblatt 21 in einer horizontalen Ausrichtung an diesem Rotorblattanschluss anzubringen. Dazu wird die Rotornabe in der gewünschten Position arretiert. Diese Arretierung wird für die weitere Beschreibung vorausgesetzt und nicht mehr explizit erwähnt.

Die Situation nach der Montage des ersten Rotorblattes 21 ist in Fig. 7 gezeigt. Dort ist das Rotorblatt 21 in der 9-Uhr-Position, während sich die Rotorblattanschlüsse 16 und 18 in der 1-Uhr- bzw. 5-Uhr-Position befinden.

Der nächste Verfahrensschritt ist in Fig. 8 dargestellt. Dort ist das Rotorblatt 21 in die 7-Uhr-Position abgesenkt. Dieses Absenken kann durch Schwerkraftwirkung erfolgen. Gleichzeitig kann der (nicht dargestellte) Kran, der das Rotorblatt 21 in die Montageposition gehoben hat, der Drehung entgegenwirken und so eine kontrollierte Drehung erzwingen.

Weiterhin ist in dieser Figur erkennbar, dass der Rotorblattanschluss 18 jetzt in der 3-Uhr-Position ist und der Rotorblattanschluss 16 befindet sich in der 11-Uhr-Position.

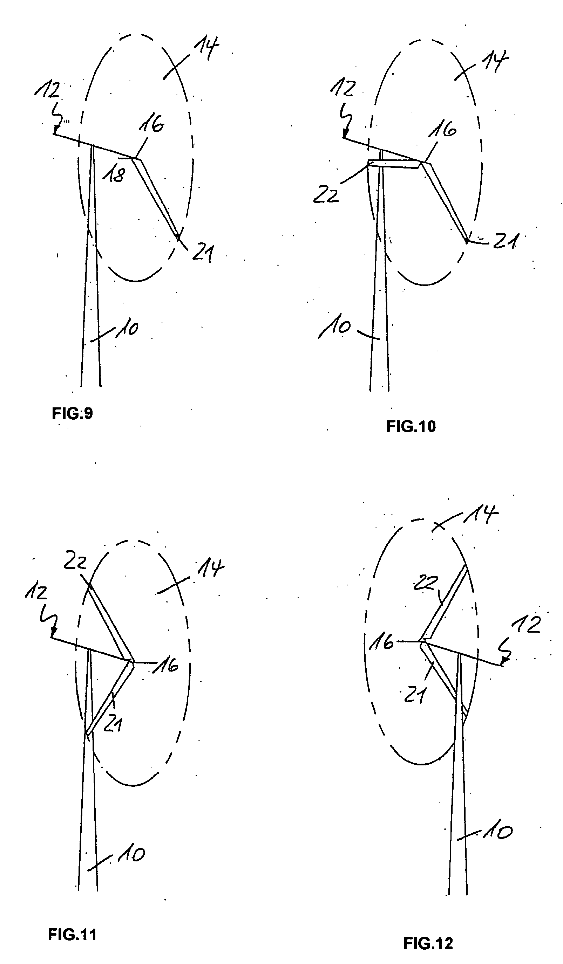

Fig. 9 verdeutlicht, dass bei unveränderter Position der Rotornabe die Gondel um 180 Grad gedreht wurde, so dass sich der Rotorkreis 14 in Betrachtungsrichtung vor dem Turm 10 befindet. Durch diese Drehung der Gondel befindet sich das Rotorblatt 21 jetzt in der 5-Uhr-Position, der Rotorblattanschluss 16 in der 1-Uhr-Position und der Rotorblattanschluss 18 in der 9-Uhr-Position. Damit kann an diesen Rotorblattanschluss 18 jetzt ein in horizontaler Lage vom Kran angehobenes weiteres Rotorblatt angebracht werden, ohne dass der Kran seinen Standort verändern muss.

- Die sich dann ergebende Situation ist in Fig. 10 dargestellt. Dort befindet sich der Rotorblattanschluss 16 noch in der 1-Uhr-Position, das erste Rotorblatt 21 in der 5-Uhr-Position, während das zweite Rotorblatt 22 jetzt in der 9-Uhr-Position dargestellt ist.

Zur Vorbereitung der Montage des dritten Rotorblattes wird dann, wie in Fig. 11 dargestellt, das Rotorblatt 21 mit Hilfe des Kranes aus der 5-Uhr-Position in die 7-Uhr-Position verschwenkt. Dadurch gelangt das zweite Rotorblatt 22 in die 11-Uhr-Position und der Rotorblattanschluss 16 gelangt in die 3-Uhr-Position. Daran anschließend wird die Gondel wiederum um 180 Grad gedreht.

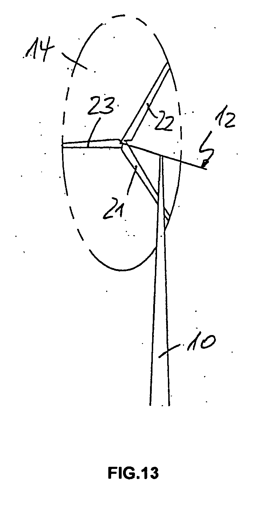

Das Ergebnis dieser Drehung ist in Fig. 12 dargestellt. Aus der Sicht des Betrachters befindet sich der Rotorkreis 14 jetzt wieder hinter dem Turm 10. Dadurch ist bei unveränderter Stellung der Rotornabe das erste Rotorblatt 21 in der 5-Uhr-Position, das zweite Rotorblatt 22 befindet sich in der 1-Uhr-Position und der Rotorblattanschluss 16 befindet sich in der 9-Uhr-Position. Somit kann wieder ohne einen Standortwechsel des Kranes ein drittes Rotorblatt an diesem Rotorblattanschluss 16 angebracht werden. Dies ist in der Fig. 13 gezeigt. Das erste Rotorblatt 21 befindet sich in der 5-Uhr-Position, das zweite Rotorblatt 22 in der 1-Uhr-Position und das dritte Rotorblatt 23 in der 9-Uhr-Position. Damit ist das erfindungsgemäße Verfahren beendet und alle drei Rotorblätter sind an der Windenergieanlage angebracht worden.

## Patentansprüche

1. Verfahren zur Montage von Rotorblättern an einer Rotornabe einer Windenergieanlage, wobei die Rotornabe mit einer Gondel verbunden ist, mit den Schritten:
a) Drehen der Rotornabe in eine vorgegebene erste Position,
b) Anbringen eines Rotorblattes (21),
c) Drehen der Rotornabe mit Hilfe des ersten Rotorblattes (21) in eine vorgegebene zweite Position,
d) Montieren eines zweiten Rotorblattes (22),
**dadurch gekennzeichnet, dass**
die Drehung der Rotornabe in Richtung der Schwerkraftwirkung des ersten Rotorblattes (21) erfolgt,
wobei die Gondel um 180 Grad gedreht wird, bevor das zweite Rotorblatt (22) angebracht wird.

2. Verfahren nach Anspruch 1,
**dadurch gekennzeichnet, dass**
a) die Rotornabe mit Hilfe des zweiten Rotorblattes (22) in eine weitere vorgegebene Position gedreht wird,
b) die Gondel erneut um 180 Grad gedreht wird, und
c) ein drittes Rotorblatt (23) angebracht wird.

3. Verfahren nach einem der Ansprüche 1 oder 2,
**dadurch gekennzeichnet, dass** ein Kran an einem Rotorblatt (21, 22) angreift und die Drehung der Nabe unterstützt.

4. Verfahren nach Anspruch 3,
**dadurch gekennzeichnet, dass** der Kran an einem Durchgangsloch (30, 32) des Rotorblattes (21, 22) angreift.

## Claims

1. A method for mounting rotor blades on a rotor hub of a wind power installation, the rotor hub being connected to a nacelle, comprising the steps of:
a) rotating the rotor hub to a predetermined first position,
b) attaching a rotor blade (21),
c) rotating the rotor hub with the aid of the first rotor blade (21) to a predetermined second position,
d) mounting a second rotor blade (22),
**characterised in that**
the rotation of the rotor hub takes place in the direction of the effect of gravitational force of the first rotor blade (21),
wherein the nacelle is rotated through 180 degrees before the second rotor blade (22) is attached.

2. A method according to claim 1,
**characterised in that**
a) the rotor hub is rotated with the aid of the second rotor blade (22) to a further predetermined position,
b) the nacelle is again rotated through 180 degrees, and
c) a third rotor blade (23) is attached.

3. A method according to either claim 1 or claim 2,
**characterised in that** a crane engages a rotor blade (21, 22) and assists the rotation of the hub.

4. A method according to claim 3,
**characterised in that** the crane engages a through-hole (30, 32) of the rotor blade (21, 22).

## Revendications

1. Procédé de montage de pales de rotor sur un moyeu de rotor d'une installation éolienne, le moyeu de rotor étant relié à une nacelle, avec les étapes consistant à :
a) pivoter le moyeu de rotor dans une première position prédéfinie,
b) monter une pale de rotor (21),
c) pivoter le moyeu de rotor à l'aide de la première pale de rotor (21) dans une deuxième position prédéfinie,
d) monter une deuxième pale de rotor (22),
**caractérisé en ce que**
la rotation du moyeu de rotor est effectuée en direction de l'action de la force de gravité de la première pale de rotor (21),
la nacelle étant pivotée de 180 degrés avant que la deuxième pale de rotor (22) ne soit montée.

2. Procédé selon la revendication 1, **caractérisé en ce que**
a) le moyeu de rotor est pivoté à l'aide de la deuxième pale de rotor (22) dans une autre position prédéfinie,
b) la nacelle est de nouveau pivotée de 180 degrés et
c) une troisième pale de rotor (23) est montée.

3. Procédé selon l'une quelconque des revendications 1 ou 2,
**caractérisé en ce qu'**une grue saisit une pale de rotor (21, 22) et assiste la rotation du moyeu.

4. Procédé selon la revendication 3,
**caractérisé en ce que** la grue saisit un trou de passage (30, 32) de la pale de rotor (21, 22).
